# FASCICULE DE BREVET EUROPEEN

(11) **EP 1 994 496 B1**
(45) Date de publication et mention de la délivrance du brevet: **13.07.2011**
(21) Numéro de dépôt: 07731680.0
(22) Date de dépôt: 01.03.2007
(51) Int. Cl.: G06Q 20/00, H04W 76/02

(54) **PROCEDE DE TRANSACTION ENTRE DEUX SERVEURS COMPORTANT UNE ETAPE PREALABLE DE VALIDATION METTANT EN OEUVRE DEUX TELEPHONES PORTABLES**
TRANSAKTIONSVERFAHREN ZWISCHEN ZWEI SERVERN MIT EINEM VORHERIGEN VALIDIERUNGSSCHRITT UNTER VERWENDUNG ZWEIER TRAGBARER TELEFONE
TRANSACTION METHOD BETWEEN TWO SERVERS INCLUDING A PRIOR VALIDATING STEP USING TWO PORTABLE TELEPHONES

(30) Priorité: 02.03.2006 FR 0650724
(43) Date de publication de la demande: 26.11.2008
(73) Titulaire: Tagattitude, 78150 Rocquencourt (FR)
(72) Inventeur: EONNET, Loïc, F-92300 Levallois (FR); EONNET, Yves, F-78860 Saint Nom La Breteche (FR)
(74) Mandataire: Delumeau, François Guy
(86) Numéro de dépôt international: PCT/FR2007/050863
(87) Numéro de publication internationale: WO 2007/099265

(56) Documents cités:
- GB-A- 2 372 615
- US-A1- 2001 007 983
- US-A1- 2003 050 081

## Description

### Arrière-plan de l'invention

Le domaine de l'invention est celui des transactions réalisées entre deux serveurs reliés entre eux par un réseau de télécommunication quelconque.

L'invention s'applique en particulier lorsque les deux serveurs sont interconnectés via le réseau Internet.

Dans ce document, le terme transaction est à comprendre au sens le plus large. On parlera de "transaction" lorsqu'une opération doit être effectuée entre ces deux serveurs, cette opération étant soumise à une autorisation préalable d'au moins l'un de ces serveurs.

Par exemple, le terme de transaction couvre une transaction monétaire dans laquelle les deux serveurs gérant chacun le compte d'un utilisateur, doivent obtenir une autorisation avant d'effectuer un virement d'un compte à l'autre.

Le terme transaction couvre aussi le basculement d'un appel téléphonique géré par un serveur de téléphonie vers un deuxième serveur de téléphonie, après autorisation explicite, notamment pour des raisons de facturation, d'au moins un de ces serveurs.

L'invention s'applique également lorsque les deux serveurs ne font qu'un. C'est par exemple le cas lorsqu'un même serveur gère les comptes bancaires de deux utilisateurs, l'autorisation requise pour effectuer un virement entre ces deux comptes étant gérée, dans cet exemple, au sein de ce même serveur.

L'invention s'intéresse plus particulièrement aux transactions faisant intervenir deux utilisateurs en situation de mobilité.

Afin de mieux comprendre l'invention, considérons par exemple le cas où un individu souhaite effectuer un virement monétaire depuis son compte vers le compte d'un individu situé à proximité de lui. Dans l'état actuel de la technique, il est nécessaire que le premier individu contacte le serveur gérant son compte bancaire, par exemple via le réseau Internet, puis place un ordre de virement en saisissant les coordonnées bancaires du destinataire de ce virement.

Cette démarche est assez lourde en situation de mobilité, car elle nécessite de saisir les coordonnées bancaires du destinataire, avec tous les risques d'erreur que cette manipulation comporte. US 2003/050081 A1 décrit un procédé pour autoriser des transactions entre un terminal mobile et un serveur.

### Objet et résumé de l'invention

La présente invention a donc pour but principal de pallier les inconvénients précités en proposant un procédé, selon la revendication 5, pour effectuer une transaction faisant intervenir deux utilisateurs en situation de mobilité.

Plus précisément, l'invention concerne un procédé pour effectuer une transaction entre un premier serveur et un deuxième serveur, dans un premier réseau de télécommunications. Ce procédé, comporte, préalablement à la réalisation de la transaction :
- une étape d'établissement d'un premier canal de communication, dans un réseau de télécommunication sans fil, entre le premier serveur et un premier terminal mobile ;
- une étape d'établissement d'un deuxième canal de communication, dans le même réseau de télécommunication sans fil, entre le deuxième serveur et un deuxième terminal mobile ;
- une étape d'envoi, par le premier serveur, d'un signal, dans le premier canal de communication sans fil, ce signal étant reçu par le premier terminal mobile, et émis par ce terminal mobile à destination du deuxième terminal mobile ;
- une étape de capture du signal par le deuxième terminal mobile, et d'envoi du signal dans le deuxième canal de communication sans fil, le signal étant reçu par le deuxième serveur ;
- une étape de vérification, par au moins l'un des deux serveurs de la validité du signal reçu ; et, le cas échéant, en fonction du résultat de ladite vérification ;
- l'étape de réalisation de la transaction.

Ainsi, en résumé, une transaction est possible entre deux serveurs d'un réseau de télécommunication, si le signal généré par l'un de ces serveurs parcourt une boucle qui rejoint le deuxième serveur, cette boucle empruntant deux canaux de télécommunication mobile établis entre chacun de ces serveurs et un terminal mobile, ces canaux étant séparés par un espace ouvert séparant les deux terminaux.

On comprend donc qu'il est nécessaire, pour que le signal parcoure cette boucle, que les deux terminaux mobiles soient placés à proximité et agencés de telle sorte que le signal émis par le premier mobile soit capté, dans d'excellentes conditions, par le deuxième terminal mobile, sans quoi le signal ne serait pas reçu dans de bonnes conditions par le deuxième serveur et donc la transaction refusée.

C'est donc le fait de rapprocher les deux terminaux mobiles, appartenant typiquement aux deux acteurs de la transaction, qui leur permet de manifester leur volonté de réaliser cette transaction.

Grâce à l'invention, il n'est plus nécessaire aux individus acteurs de la transaction de s'authentifier explicitement, cette authentification et la sécurisation de la transaction étant réalisée par les couches de sécurisation du protocole GSM.

De ce fait, il n'y a plus de risque d'erreur de saisie.

Au surplus, et de façon très avantageuse, le signal émis par l'un des deux serveurs peut véhiculer un code de longueur très importante, en pratique inviolable, et de toutes façons beaucoup plus long que les codes utilisés dans un mécanisme classique d'authentification à mot de passe.

Avantageusement, le procédé selon l'invention en nécessite ni matériel spécifique (lecteur de carte, ...) ni ajout de logiciel dans les terminaux mobiles des utilisateurs. En conséquence, les premier et deuxième canaux de communication peuvent être établis par des opérateurs différents et les terminaux mobiles peuvent être de constructeurs différents.

Dans un mode préféré de réalisation, les terminaux mobiles sont positionnés de sorte que le signal est émis par un haut-parleur du terminal mobile ayant reçu le signal en provenance d'un serveur, est capté par un microphone de l'autre terminal mobile.

Dans ce mode particulier de réalisation, il est donc nécessaire de positionner les terminaux tête-bêche, le haut-parleur du premier terminal étant placé à très courte distance du microphone du deuxième terminal mobile, sans quoi le bruit ambiant dégraderait le signal et celui-ci serait considéré erroné par le deuxième serveur.

Cette très courte distance permet d'éviter que le signal émis par le premier terminal mobile soit capté par un tiers mal intentionné.

L'invention concerne aussi un serveur informatique, selon la revendication 1, connecté à un premier réseau de télécommunication comportant :
- des moyens pour établir un canal de communication, dans un réseau de télécommunication sans fil, avec un terminal mobile ;
- des moyens pour envoyer un signal, dans le canal de communication sans fil, ce signal étant destiné à un deuxième serveur connecté au premier réseau de télécommunications ; et
- des moyens pour autoriser la réalisation une transaction avec le deuxième serveur, si et seulement si le signal a été validé par au moins l'un des serveurs.

Corrélativement, l'invention vise un procédé, selon la revendication 2, susceptible d'être mis en oeuvre par un premier serveur pour autoriser la réalisation d'une transaction avec un deuxième serveur dans un premier réseau de télécommunications comportant :
- une étape pour établir un canal de communication, dans un réseau de télécommunication sans fil, avec un terminal mobile ;
- une étape d'envoi d'un signal, dans le canal de communication sans fil, ce signal étant destiné au deuxième serveur ; et
- une étape d'autorisation de la transaction si le signal a été reçu par le deuxième serveur, et validé par au moins l'un des serveurs.

Dans un mode préféré de réalisation, les différentes étapes du procédé d'autorisation sont déterminées par des instructions de programmes d'ordinateurs.

En conséquence, l'invention vise aussi un programme d'ordinateur, selon la revendication 3, sur un support d'informations, ce programme étant susceptible d'être mis en oeuvre dans un serveur ou plus généralement dans un ordinateur, ce programme comportant des instructions adaptées à la mise en oeuvre des étapes d'un procédé d'autorisation tel que mentionné.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations, selon la revendication 4, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise aussi l'utilisation du procédé tel que mentionné ci-dessus pour effectuer une transaction monétaire entre un compte d'un premier utilisateur et un compte d'un deuxième utilisateur, les comptes étant respectivement gérés par les premier et deuxième serveurs, la transaction étant réalisée, si et seulement si chacun des utilisateurs a préalablement établi un canal de communication dans un réseau de communication sans fil entre son terminal mobile et l'un des serveurs, ces terminaux étant positionnés l'un par rapport à l'autre de sorte qu'un signal émis par l'un des serveurs, peut être acheminé vers l'autre serveur, et validé par au moins l'un des serveurs.

L'invention vise aussi l'utilisation du procédé tel que mentionné ci-dessus pour basculer une liaison téléphonique établie entre un premier serveur de téléphonie et un premier terminal mobile dans un réseau de communication sans fil, vers une liaison téléphonique établie entre un deuxième serveur de téléphonie et un deuxième terminal mobile dans le réseau de communication sans fil, le basculement étant réalisé, si et seulement si les terminaux sont positionnés l'un par rapport à l'autre de sorte qu'un signal émis par l'un des serveurs, peut être acheminé vers l'autre serveur, et validé par au moins l'un des serveurs.

Cette utilisation permet avantageusement de basculer un appel reçu par un utilisateur sur son terminal mobile vers le terminal mobile d'un autre utilisateur situé à proximité de lui.

Une fois ce basculement opéré, la communication téléphonique établie avec le premier utilisateur est rompue de sorte que celui-ci peut éteindre ou utiliser son terminal mobile à un autre effet.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, dans leur environnement, deux serveurs effectuant une transaction, conformément à l'invention ; et
- la figure 2 représente sous forme d'organigramme les principales étapes d'un procédé pour effectuer une transaction conformément à l'invention dans un mode préféré de réalisation.

### Description détaillée d'un premier mode de réalisation

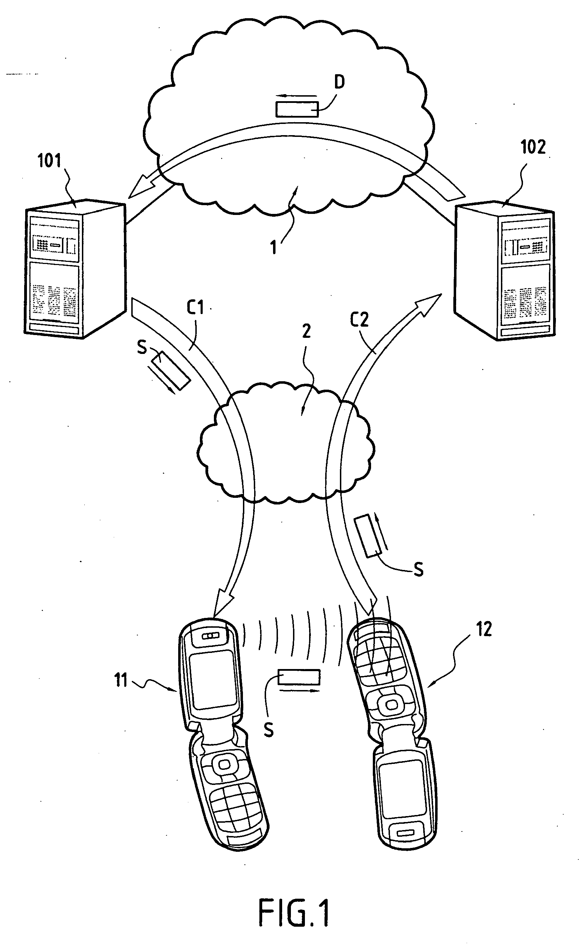

Sur la **figure 1****,** on a représenté deux serveurs informatiques 101, 102 connectés via un premier réseau de télécommunication 1.

Dans l'exemple décrit ici, ce réseau de télécommunication 1 est le réseau Internet.

Nous supposerons dans cet exemple que les serveurs informatiques 101 et 102 gèrent respectivement les comptes bancaires d'un premier et d'un deuxième utilisateurs.

On supposera, dans cet exemple, que le deuxième utilisateur souhaite transférer un montant sur le compte du premier utilisateur.

Cette opération se traduit par une transaction entre les deux serveurs, transaction soumise à l'autorisation explicite des deux utilisateurs.

Dans le scénario décrit ici, nous supposerons que les deux utilisateurs sont situés à proximité l'un de l'autre, par exemple dans la même pièce.

Chacun des ces utilisateurs possède un terminal mobile, ces terminaux étant référencés 11 et 12 à la figure 1.

Nous supposerons que pour effectuer la transaction, le premier utilisateur, détenteur du terminal mobile 11, appelle un numéro de téléphone correspondant à ce service et établit par ce fait un premier canal de communication C1, dans le réseau 2 de télécommunication sans fil, avec le premier serveur 101.

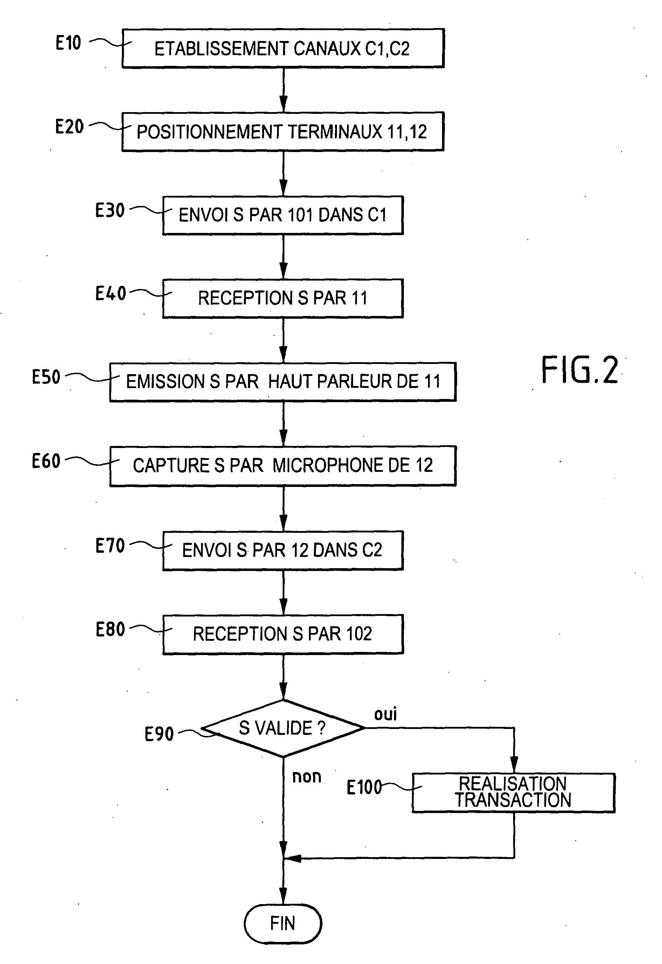

L'établissement de ce premier canal fait partie de l'étape E10 d'un procédé pour effectuer une transaction conforme à l'invention et dont l'organigramme est représenté à la **figure 2****.**

Dans le scénario décrit ici, le premier serveur 101 émet, dans le premier canal de communication C1, un message vocal à destination du premier utilisateur l'invitant à appuyer sur une touche prédéterminée de son terminal portable 11, pour confirmer le choix de ce service.

Le premier utilisateur appuie alors sur cette touche de son terminal 11, ce qui génère l'envoi d'un code DTMF reçu par le premier serveur informatique 101.

Le premier serveur informatique 101 émet alors un message vocal invitant le premier utilisateur à lui indiquer, via le premier canal de communication C1, le numéro du terminal 102 du deuxième utilisateur avec lequel il souhaite effectuer une transaction.

Dans le scénario décrit ici, le premier utilisateur saisit ce numéro au moyen du clavier de son terminal 11, ce numéro étant transmis, via le premier canal de communication C1, au premier serveur informatique 101, sous forme d'une séquence de codes DTMF.

Nous supposerons dans cet exemple que le premier serveur informatique 101 comporte une base de données dans laquelle il obtient, à partir de ce numéro, l'adresse sur le premier réseau de télécommunication, d'un deuxième serveur informatique 102 gérant le compte du deuxième utilisateur.

Le premier serveur informatique 101 envoie un message sur le premier réseau de télécommunication 1, au deuxième serveur informatique 102, pour lui indiquer qu'une transaction doit être réalisée entre ces deux serveurs.

Conformément à l'invention, le deuxième serveur 102 établit, au cours de cette même étape E10, un deuxième canal de communication C2, dans le réseau 2 de télécommunication mobile sans fil, avec le terminal mobile 12 du deuxième utilisateur.

Nous sommes alors dans la situation dans laquelle :
- un premier canal de communication sans fil est établi entre le premier terminal 11 et le premier serveur 101 ;
- une liaison Internet est établie entre le premier serveur 101 et le deuxième serveur 102 ; et
- un deuxième canal C2 de télécommunication sans fil est établi entre le deuxième serveur 102 et le terminal mobile 12 du deuxième utilisateur.

Puis, l'un des deux serveurs, par exemple le deuxième serveur 102, invite l'utilisateur du terminal mobile 12 avec lequel il a établi le canal de communication sans fil C1, à approcher le haut-parleur de son terminal mobile 11 du microphone de l'autre terminal mobile 12.

Nous supposons que les terminaux 11 et 12 sont alors convenablement positionnés (étape E20).

Après un délai prédéterminé, le premier serveur 101 émet (étape E30) dans le premier canal de communication sans fil C1, un signal S.

Ce signal S est reçu au cours d'une étape E40 par le premier terminal mobile 11, et émis (étape E50) par le haut-parleur de ce terminal 11.

Etant donné que le microphone du terminal 12 est placé à proximité du haut-parleur du terminal 11, le signal S est capturé, au cours d'une étape E60, par le deuxième terminal mobile 12.

Ce signal S est ensuite acheminé, par le deuxième canal de communication sans fil 2, au deuxième serveur 102.

Le deuxième serveur 102 reçoit ce signal S au cours d'une étape E80.

Bien entendu, il apparaît ici que ce signal S est reçu par le deuxième serveur 102 du fait que les deux terminaux mobiles étaient placés à proximité, dans un agencement bien particulier permettant la capture par le microphone du terminal 12 du signal S émis par le haut-parleur du terminal 11.

Au cours d'une étape E90, au moins l'un des deux serveurs 101, 102 vérifie la validité du signal reçu S.

Dans un mode préféré de réalisation, le signal reçu par le deuxième serveur 102 est transmis, via le premier réseau 1 au premier serveur 101, qui est capable de comparer ce signal avec le signal S qu'il avait émis à l'étape E30 d'envoi déjà décrite.

Dans une autre variante, le deuxième serveur informatique 102 est adapté à vérifier par lui-même si ce signal S reçu au cours de l'étape E80 est valide.

Quoi qu'il en soit, lorsque le signal S est validé par au moins l'un des deux serveurs 101, 102, ces serveurs considèrent que les utilisateurs des terminaux mobiles 11, 12 sont d'accord pour effectuer la transaction.

En conséquence, au cours d'une étape E100, ces serveurs informatiques 101, 102 effectuent la transaction.

Dans l'exemple décrit ici, cette transaction est matérialisée par l'envoi d'une donnée informatique D du deuxième serveur informatique 102 vers le premier serveur informatique 101, cette donnée étant représentative du montant de la transaction.

### Description détaillée d'un deuxième mode de réalisation

Nous allons maintenant décrire un deuxième mode de réalisation de l'invention, dans lequel le serveur informatique 101 gère les comptes bancaires des premier et deuxième utilisateurs.

Nous supposerons ici, qu'au cours de l'étape E10, l'utilisateur du premier terminal 11a établi un premier canal de communication C1 avec le serveur informatique 101, et communiqué via ce canal, le montant qu'il souhaite transférer sur le compte d'un deuxième utilisateur, par exemple par l'envoi d'une séquence de codes DTMF correspondant au montant de la transaction saisi au clavier du premier terminal 11.

Dans ce scénario, le serveur informatique 101 n'émet pas de message invitant l'utilisateur à lui communiquer le numéro du terminal 102 du bénéficiaire de la transaction mais invite simplement l'utilisateur du premier terminal 11 a approcher son terminal 11 du terminal 12 du bénéficiaire de la transaction.

Dans ce scénario, nous supposerons que l'utilisateur du deuxième terminal 12 a préalablement appelé le numéro de téléphone correspondant à ce service et établit par ce fait un deuxième canal de communication C2, avec le même serveur 101. Nous supposerons que l'utilisateur du deuxième terminal 12 a indiqué au serveur 101, par l'envoi d'un code DTMF, qu'il souhaitait recevoir un transfert sur son compte. Sur réception d'une telle requête, le serveur 101 invite l'utilisateur du deuxième terminal 12 à approcher ce terminal 12 du terminal 11 de l'autre partie à la transaction.

Les terminaux étant positionnés tête-bêche (étape E20), le signal S émis (étape E30) le premier canal de communication sans fil C1 par le serveur 101, est reçu (étape E80) par ce même serveur 101 dans le deuxième canal de communication C2 établi avec le deuxième terminal 12.

Le serveur 101 est alors apte à vérifier (étape E90) que le signal S reçu dans le deuxième canal de communication correspond à celui envoyé (étape E30) au premier terminal 11. La transaction est alors validée (étape E100).

Dans ce scénario, l'utilisateur du premier terminal 11 n'a pas besoin de connaître le numéro de téléphone du terminal 12 de l'autre partie à la transaction, le serveur 101 étant suffisant pour authentifier les deux parties, par exemple à partir des numéros de terminaux 11 et 12 obtenus lors de l'établissement des canaux de communication C1 et C2.

### Description détaillée d'un troisième mode de réalisation

Nous allons maintenant décrire une troisième utilisation du procédé selon l'invention.

Nous supposerons ici que le propriétaire du terminal mobile 11 est en communication téléphonique avec un tiers, cette communication étant gérée par le premier serveur informatique 101. Nous supposerons que le canal de communication sans fil C1 entre le serveur 101 et le terminal mobile 11 a été établi au cours d'une étape E10.

Au cours de cette conversation, l'utilisateur du terminal mobile 11 décide de basculer la communication téléphonique en cours vers le terminal mobile 12 d'un utilisateur situé à proximité de lui.

Dans ce scénario, l'utilisateur du terminal mobile 11 effectue une séquence de touches prédéterminée correspondant à ce service.

Cette séquence de touches est reçue sous la forme d'une séquence de code DTMF par le premier serveur informatique 101.

Sur réception de cette séquence de touches prédéterminée, le premier serveur informatique 101 demande, dans le canal de communication C1 établi avec le premier terminal mobile 11, à ce que lui soit transmis le numéro de téléphone portable sur lequel l'appel doit être basculé.

Nous supposerons dans cet exemple que le numéro de ce téléphone portable est saisi par l'utilisateur du terminal mobile 11 au moyen de son clavier.

Ce numéro est alors reçu par le premier serveur informatique 101, via le premier canal de communication sans fil C1.

Comme les deux utilisateurs sont situés à proximité, il est fort probable que le premier serveur informatique 101 soit adapté à ouvrir un deuxième canal de communication sans fil avec le terminal mobile 12 du deuxième utilisateur.

Nous supposerons que c'est le cas et que le premier serveur 101 établit ce canal C2 au cours de la même étape E10 du procédé selon l'invention.

Comme décrit précédemment, le premier serveur informatique 101 demande alors, par exemple à l'utilisateur du deuxième terminal mobile 12, de placer les terminaux mobiles 11 et 12 tête-bêche de sorte que le haut-parleur de l'un soit en vis-à-vis du microphone de l'autre.

Ces terminaux 11 et 12 sont correctement positionnés au cours d'une étape E20.

Puis, au cours d'une étape E30, le serveur informatique 101 envoie un signal S, par exemple au premier terminal mobile 11, ce signal S étant reçu (étape E40) par ce terminal 11, émis (étape E50) par son haut-parleur et capturé (étape E60) par le microphone de l'autre terminal mobile 12.

Ce signal revient alors, via le deuxième canal de communication mobile C2, au premier serveur informatique 101 (étapes E70 et E80) qui est capable de vérifier sa validité (étape E90).

Si le signal S est validé, cela signifie que les utilisateurs des terminaux mobiles 11 et 12 sont d'accord pour que la communication téléphonique avec le tiers soit basculée du premier terminal mobile 11 vers le deuxième terminal mobile 12.

En conséquence, au cours d'une étape E100, le premier serveur informatique 101 effectue ce basculement.

Dans les deux exemples de réalisation décrits ici, le signal S est émis par le haut-parleur d'un terminal et capté par le microphone de l'autre.

En variante, d'autres techniques de communication très courte distance peuvent être utilisées pour véhiculer le signal S et notamment les technologies de type infrarouge ou radionumériques, par exemple conformes aux normes WiFi ou Bluetooth.

## Revendications

1. Serveur informatique (101) connecté à un premier réseau (1) de télécommunications et destiné à la réalisation d'une transaction avec un deuxième serveur (102) et soumise à l'autorisation des utilisateurs d'un premier terminal mobile et d'un deuxième terminal mobile, le serveur informatique (101) comportant :
- des moyens pour établir (E10) un canal de communication (C1), dans un réseau (2) de télécommunication sans fil, avec le premier terminal mobile (11);
- des moyens pour envoyer un signal (S), dans ledit canal de communication sans fil (C1), ce signal (S) étant destiné au deuxième serveur (102) connecté audit premier réseau (1) de télécommunications ;
et
- des moyens pour autoriser la réalisation de la transaction (E100) avec ledit deuxième serveur (102), si et seulement si ledit signal transmis via le premier terminal mobile (11) été reçu par le deuxième serveur (102) et validé par au moins l'un desdits serveurs (101, 102).

2. Procédé, susceptible d'être mis en oeuvre par un premier serveur (101) pour autoriser la réalisation d'une transaction avec un deuxième serveur (102) dans un premier réseau (1) de télécommunications, la transaction étant soumise à l'autorisation des utilisateurs d'un premier terminal mobile et d'un deuxième terminal mobile, le procédé comportant :
- une étape pour établir (E10) un canal de communication (C1), dans un réseau (2) de télécommunication sans fil, avec le premier terminal mobile (11);
- une étape (E30) d'envoi d'un signal (S), dans ledit canal de communication sans fil (C1), ce signal (S) étant destiné audit deuxième serveur ; et
- une étape (E100) d'autorisation de ladite transaction si ledit signal (S) transmis via le premier terminal mobile (11) a été reçu (E80) par ledit deuxième serveur (102), et validé par au moins l'un desdits serveurs (101, 102).

3. Programme d'ordinateur comportant des instructions pour l'exécution des étapes du procédé d'autorisation selon la revendication 2 lorsque ledit programme est exécuté par un ordinateur.

4. Support d'enregistrement lisible par un ordinateur sur lequel est enregistré un programme d'ordinateur comprenant des instructions pour l'exécution des étapes du procédé d'autorisation selon la revendication 2.

5. Procédé pour effectuer une transaction soumise à l'autorisation des utilisateurs d'un premier terminal mobile et d'un deuxième terminal mobile entre un premier serveur (101) selon la revendication 1 et un deuxième serveur (102), dans un premier réseau (1) de télécommunications, le procédé comportant, préalablement à la réalisation (E100) de ladite transaction :
- une étape (E10) d'établissement d'un premier canal de communication (C1), dans un réseau (2) de télécommunication sans fil, entre ledit premier serveur (101) et le premier terminal mobile (11); et comportant :
- une étape (E10) d'établissement d'un deuxième canal de communication (C2), dans ledit réseau (2) de télécommunication sans fil, entre ledit deuxième serveur (102) et le deuxième terminal mobile (12) ;
- une étape (E30) d'envoi, par ledit premier serveur (101), d'un signal (S) étant destiné au deuxième serveur (102) dans ledit premier canal de communication sans fil (C1), ce signal (S) étant reçu (E40) par ledit premier terminal mobile (11), et émis (E50) par ce terminal mobile (11) à destination dudit deuxième terminal mobile (12);
- une étape (E60) de capture dudit signal (S) par ledit deuxième terminal mobile (12), et d'envoi (E70) dudit signal (S) dans ledit deuxième canal de communication sans fil (2), ledit signal (S) étant reçu (E80) par ledit deuxième serveur (102) ;
- une étape (E90) de vérification, par au moins l'un des deux serveurs (101, 102) de la validité dudit signal reçu (S) ; et, le cas échéant, en fonction du résultat de ladite vérification (E90) ;
- ladite étape (E100) de réalisation de la transaction.

6. Procédé selon la revendication 5, **caractérisé en ce que** lesdits terminaux mobiles (11, 12) sont positionnés (E20) de sorte que ledit signal (S) est émis par un haut-parleur du terminal mobile (11) ayant reçu (E40) ledit signal (S) en provenance d'un serveur (101), et capté (E60) par un microphone de l'autre terminal mobile (12).

7. Procédé selon la revendication 5 ou 6, dans lequel ledit premier serveur et ledit deuxième serveur ne font qu'un.

8. Utilisation du procédé selon l'une des revendications 5 à 7, pour effectuer une transaction monétaire entre un compte d'un premier utilisateur et un compte d'un deuxième utilisateur, lesdits comptes étant respectivement gérés par lesdits premier et deuxième serveurs (101, 102), ladite transaction étant réalisée, si et seulement si (E90) chacun desdits utilisateurs a préalablement établi (E10) un canal de communication (C1, C2) dans un réseau de communication sans fil (2) entre un terminal mobile (11, 12) et l'un desdits serveurs (101, 102), ces terminaux (11, 12) étant positionnés l'un par rapport à l'autre de sorte qu'un signal (S) émis (E30) par l'un desdits serveurs (101), peut être acheminé (E40-E80) vers l'autre serveur (102), et validé (E90) par au moins l'un desdits serveurs (101, 102).

9. Utilisation du procédé selon l'une des revendications 5 à 7, pour basculer une liaison téléphonique (C1) établie (E10) entre un premier serveur de téléphonie (101) et un premier terminal mobile (11) dans un réseau de communication sans fil (2), vers une liaison téléphonique (C2) établie (E10) entre un deuxième serveur de téléphonie (102) et un deuxième terminal mobile (12) dans ledit réseau de communication sans fil (2), ledit basculement étant réalisé, si et seulement si (E90) lesdits terminaux (11, 12) sont positionnés l'un par rapport à l'autre de sorte qu'un signal (S) émis (E30) par l'un desdits serveurs (101), peut être acheminé (E40-E80) vers l'autre serveur (102), et validé (E90) par au moins l'un desdits serveurs (101, 102).

## Claims

1. A computer server (101) connected to a first telecommunications network (1) for effecting a transaction with a second server (102), said transaction being subject to the authorization of the user of a first mobile terminal and of the user of a second mobile terminal, the computer server including:
• means for setting up (E10) a communications channel (C1) in a wireless telecommunications network (2) with the first mobile terminal (11);
• means for sending a signal (S) on said wireless communications channel (C1) to said second server (102) connected to said first telecommunications network (1); and
• means for authorizing the transaction (E100) with said second server (102) if and only if said signal transmitted via said first mobile terminal (11) has been received by said second server (102) and validated by one or both of said servers (101, 102).

2. A method that can be used by a first server (101) to authorize a transaction with a second server (102) in a first telecommunications network (1), the transaction being subject to the authorization of the user of a first mobile terminal and of the user of a second mobile terminal, the method comprising:
• a step of setting up (E10) a communications channel (C1) in a wireless telecommunications network (2) with the first mobile terminal (11);
• a step (E30) of sending a signal (S) on said wireless communications channel (C1) to said second server; and
• a step (E100) of authorizing said transaction if said signal transmitted via said mobile terminal (11) has been received (E80) by said second server (102) and validated by one or both of said servers (101, 102).

3. A computer program including instructions for executing steps of the authorization method of claim 2 when said program is executed by a computer.

4. A computer-readable storage medium on which is stored a computer program comprising instructions for executing the steps of the authorization method according to claim 2.

5. A method of effecting a transaction, subject to the authorization of the user of a first mobile terminal and of the user of a second mobile terminal, between a first server (101) according to claim 1 and a second server (102) in a first telecommunications network (1), the method comprising being, before the step (E100) of effecting said transaction:
• a step (E10) of setting up a first communications channel (C1) in a wireless telecommunications network (2) between said first server (101) and the first mobile terminal (11);
• a step (E10) of setting up a second communications channel (C2) in said wireless communications network (2) between said second server (102) and said second mobile terminal (12);
• a step (E30) of said first server (101) sending a signal (S) to said second server (102) on said first wireless communications channel (C1), which signal (S) is received (E40) by said first mobile terminal (11) and emitted (E50) by the first mobile terminal (11) to said second mobile terminal (12);
• a step (E60) of said second mobile terminal (12) picking up said signal (S) and sending (E70) said signal (S) on said second wireless communications channel (2), said signal (S) being received (E80) by said second server (102);
• a step (E90) of one or both of the two servers (101, 102) verifying the validity of said received signal (S); and,
• where applicable, as a function of the result of said verification (E90), said step (E100) of effecting the transaction.

6. A method according to claim 5, **characterized in that** said mobile terminals (11, 12) are placed (E20) so that said signal (S) is reproduced by a loudspeaker of the mobile terminal (11) that received (E40) said signal (S) from a server (101) and picked up (E60) by a microphone of the other mobile terminal (12).

7. A method according to claim 5 or 6 in which said first server and said second server are same.

8. A use of the method according to any one of claims 5 to 7, to effect a monetary transaction between an account of a first user and an account of a second user, said accounts being managed by said first and second servers (101, 102), respectively, said transaction being effected if and only if (E90) each of said users has previously set up (E10) a communications channel (C1, C2) in a wireless communications network (2) between a mobile terminal (11, 12) and one of said servers (101, 102), which terminals (11, 12) are positioned relative to each other so that a signal (S) sent (E30) by one of said servers (101) can be routed (E40-E80) to the other server (102) and validated (E90) by one or both of said servers (101, 102).

9. A use of the method according to any one of claims 5 to 7, for rerouting a telephone connection (C1) set up (E10) between a first telephone server (101) and a first mobile terminal (11) in a wireless communications network (2) to a telephone connection (C2) set up (E10) between a second telephone server (102) and a second mobile terminal (12) in said wireless communications network (2), said rerouting being effected if and only if (E90) said terminals (11, 12) are positioned relative to each other so that a signal (S) sent (E30) by one of said servers (101) can be routed (E40-EOO) to the other server (102) and validated (E90) by one or both of said servers (101, 102).

## Patentansprüche

1. Server (101), der an ein erstes Telekommunikationsnetz (1) angeschlossen ist und für die Ausführung einer Transaktion mit einem zweiten Server (102), die der Genehmigung der Nutzer eines ersten mobilen Endgerätes und eines zweiten mobilen Endgerätes unterliegt, bestimmt ist, wobei der Server (101) umfaßt:
- Mittel zum Einrichten (E10) eines Kommunikationskanals (C1), in einem drahtlosen Telekommunikationsnetz (2), mit dem ersten mobilen Endgerät (11),
- Mittel zum Senden eines Signals (S) in dem drahtlosen Kommunikationskanal (C1), wobei dieses Signal (S) für den an das erste Telekommunikationsnetz (1) angeschlossenen zweiten Server (102) bestimmt ist, und
- Mittel zur Genehmigung der Ausführung der Transaktion (E100) mit dem zweiten Server (102), wenn und nur wenn das über das erste mobile Endgerät (11) übertragene Signal von dem zweiten Server (102) empfangen und durch wenigstens einen der Server (101, 102) validiert worden ist.

2. Verfahren, das geeignet ist, durch einen ersten Server (101) durchgeführt zu werden, um die Ausführung einer Transaktion mit einem zweiten Server (102) in einem ersten Telekommunikationsnetz (1) zu genehmigen, wobei die Transaktion der Genehmigung der Nutzer eines ersten mobilen Endgerätes und eines zweiten mobilen Endgerätes unterliegt, wobei das Verfahren umfaßt:
- einen Schritt zum Einrichten (E10) eines Kommunikationskanals (C1), in einem drahtlosen Telekommunikationsnetz (2), mit dem ersten mobilen Endgerät (11),
- einen Schritt (E30) zum Senden eines Signals (S) in dem drahtlosen Kommunikationskanal (C1), wobei dieses Signal (S) für den zweiten Server (102) bestimmt ist, und
- einen Schritt (E100) zur Genehmigung der Transaktion, wenn das über das erste mobile Endgerät (11) übertragene Signal (S) von dem zweiten Server (102) empfangen (E80) und durch wenigstens einen der Server (101, 102) validiert worden ist.

3. Computerprogramm, umfassend Befehle für die Ausführung der Schritte des Genehmigungsverfahrens nach Anspruch 2, wenn das Programm durch einen Computer ausgeführt wird.

4. Computerlesbarer Aufzeichnungsträger, auf dem ein Computerprogramm gespeichert ist, das Befehle für die Ausführung der Schritte des Genehmigungsverfahrens nach Anspruch 2 umfaßt.

5. Verfahren zum Ausführen einer Transaktion, die der Genehmigung der Nutzer eines ersten mobilen Endgerätes und eines zweiten mobilen Endgerätes unterliegt, zwischen einem ersten Server (101) nach Anspruch 1 und einem zweiten Server (102) in einem ersten Telekommunikationsnetz (1), wobei das Verfahren vor der Ausführung (E100) der Transaktion umfaßt:
- einen Schritt (E10) zum Einrichten eines ersten Kommunikationskanals (C1), in einem drahtlosen Telekommunikationsnetz (2), zwischen dem ersten Server (101) und dem ersten mobilen Endgerät (11), und umfaßt:
- einen Schritt (E10) zum Einrichten eines zweiten Kommunikationskanals (C2), in dem drahtlosen Telekommunikationsnetz (2), zwischen dem zweiten Server (102) und dem zweiten mobilen Endgerät (12),
- einen Schritt (E30) zum Senden, durch den ersten Server (101), eines für den zweiten Server (102) bestimmten Signals (S) in dem ersten drahtlosen Kommunikationskanal (C1), wobei dieses Signal (S) durch das erste mobile Endgerät (11) empfangen (E40) und durch dieses mobile Endgerät (11) zu dem zweiten mobilen Endgerät (12) gesendet wird (E50),
- einen Schritt (E60) zum Empfangen des Signals (S) durch das zweite mobile Endgerät (12) und zum Senden (E70) des Signals (S) in dem zweiten drahtlosen Kommunikationskanal (C2), wobei das Signal (S) durch den zweiten Server (102) empfangen wird (E80),
- einen Schritt (E90) zur Überprüfung der Validität des empfangenen Signals (S) durch wenigstens einen der beiden Server (101, 102), und gegebenenfalls in Abhängigkeit des Ergebnisses der Überprüfung (E90),
- den Schritt (E100) zur Ausführung der Transaktion.

6. Verfahren nach Anspruch 5, **dadurch gekennzeichnet, daß** die mobilen Endgeräte (11, 12) derart positioniert (E20) sind, daß das Signal (S) über einen Lautsprecher des mobilen Endgerätes (11), das das von einem Server (101) stammende Signal (S) empfangen hat (E40), gesendet wird und durch ein Mikrofon des anderen mobilen Endgerätes (12) empfangen wird (E60).

7. Verfahren nach Anspruch 5 oder 6, wobei der erste Server und der zweite Server nur einer sind.

8. Verwendung des Verfahrens nach einem der Ansprüche 5 bis 7, zum Ausführen einer Geldtransaktion zwischen einem Konto eines ersten Nutzers und einem Konto eines zweiten Nutzers, wobei die Konten durch den ersten bzw. den zweiten Server (101, 102) verwaltet werden, wobei die Transaktion ausgeführt wird, wenn und nur wenn (E90) ein jeder der Nutzer zuvor einen Kommunikationskanal (C1, C2) in einem drahtlosen Kommunikationsnetz (2) zwischen einem mobilen Endgerät (11, 12) und einem der Server (101, 102) eingerichtet hat (E10), wobei diese Endgeräte (11, 12) derart zueinander positioniert sind, daß ein Signal (S), das durch einen der Server (101) gesendet wird (E30), zu dem anderen Server (102) geleitet (E40-E80) und durch wenigstens einen der Server (101, 102) validiert werden kann.

9. Verwendung des Verfahrens nach einem der Ansprüche 5 bis 7, zum Umschalten einer zwischen einem ersten Telefonserver (101) und einem ersten mobilen Endgerät (11) in einem drahtlosen Kommunikationsnetz (2) hergestellten Telefonverbindung (C1) zu einer zwischen einem zweiten Telefonserver (102) und einem zweiten mobilen Endgerät (12) in dem drahtlosen Kommunikationsnetz (2) hergestellten Verbindung (C2), wobei die Umschaltung erfolgt, wenn und nur wenn (E90) die Endgeräte (11, 12) so zueinander positioniert sind, daß ein Signal (S), das durch einen der Server (101) gesendet wird (E30), zu dem anderen Server (102) geleitet (E40-E80) und durch wenigstens einen der Server (101, 102) validiert werden kann.
